# EUROPEAN PATENT SPECIFICATION

(11) **EP 4 151 593 B1**
(45) Date of publication and mention of the grant of the patent: **19.03.2025**
(21) Application number: 21818444.8
(22) Date of filing: 27.04.2021
(51) Int. Cl.: C01B 32/20, H01M 10/54, H01M 4/587

(54) **METHOD FOR GRAPHITE PURIFICATION AND LATTICE RECONSTRUCTION IN POWER BATTERY**
VERFAHREN ZUR GRAPHITREINIGUNG UND GITTERREKONSTRUKTION IN EINER LEISTUNGSBATTERIE
PROCÉDÉ DE PURIFICATION DE GRAPHITE ET RECONSTRUCTION DE RÉSEAU DANS UNE BATTERIE D'ALIMENTATION

(30) Priority: 01.06.2020 CN 202010485582
(43) Date of publication of application: 22.03.2023
(73) Proprietor: Guangdong Brunp Recycling Technology Co., Ltd., Foshan, Guangdong 528137 (CN); Hunan Brunp Recycling Technology Co., Ltd., Changsha, Hunan 410600 (CN); Hunan Brunp EV Recycling Co., Ltd., Changsha, Hunan 410600 (CN)
(72) Inventor: YU, Haijun, Foshan, Guangdong 528137 (CN); PENG, Ting, Foshan, Guangdong 528137 (CN); XIE, Yinghao, Foshan, Guangdong 528137 (CN); ZHANG, Xuemei, Foshan, Guangdong 528137 (CN); YANG, Yunguang, Foshan, Guangdong 528137 (CN); WANG, Yingnan, Foshan, Guangdong 528137 (CN)
(74) Representative: LifeTech IP Spies & Behrndt Patentanwälte PartG mbB
(86) International application number: PCT/CN2021/090331
(87) International publication number: WO 2021/244189

(56) References cited:
- WO-A1-2009/129271
- CN-A- 101 710 632
- CN-A- 103 346 365
- CN-A- 107 887 666
- CN-A- 109 837 392
- CN-A- 110 690 519
- CN-A- 111 204 757
- CN-A- 111 807 359
- JP-A- 2007 323 868
- CHUNWEI LIU ET AL: "Recycling of spent lithium-ion batteries in view of lithium recovery: A critical review", JOURNAL OF CLEANER PRODUCTION, vol. 228, 1 August 2019 (2019-08-01), AMSTERDAM, NL, pages 801 - 813, XP055725007, ISSN: 0959-6526, DOI: 10.1016/j.jclepro.2019.04.304
- DATABASE WPI Week 2020042, Derwent World Patents Index; AN 2020-38046B, XP002810221
- DATABASE WPI Week 2020008, Derwent World Patents Index; AN 2020-07274A, XP002810222
- DATABASE WPI Week 2020052, Derwent World Patents Index; AN 2020-51468N, XP002810223

## Description

### FIELD

The disclosure relates to the field of battery graphite, and in particular relates to a method for purification and lattice reconstruction of graphite in a power battery.

### BACKGROUND

Driven by policies, the new energy industry is booming. At the same time, the number of retired power batteries has increased year by year. The previously installed power batteries have entered or will enter the retirement period from 2018 to 2025. According to the fact that a service life of battery is estimated to be 8 years for a passenger electric vehicle and 5 years for a commercial power electric vehicle, it is estimated that the retired power batteries will reach 32.94 GWh in 2022, and the market scale is expected to reach 11 billion Yuan in 2020 and 38 billion Yuan by 2025. Therefore, recycling the retired power batteries has extremely high economic benefits and social value.

In recent years, the scrap peak of lithium batteries has brought a large number of waste batteries. In the face of such huge amount of graphite in the waste batteries, if landfill or high-temperature incineration is adopted blindly, although the immediate dilemma can be solved preliminarily, in the long run, such approaches not only exacerbate the dust pollution in the atmosphere and the greenhouse effect, but also affect the sustainable development of the graphite industry. The recycling and harmless treatment technologies of waste batteries have become the focus of attention.

The traditional method for recovering and regenerating graphite uses cellulose acetate as a surface modifier for coating, and performs the surface modification under a nitrogen atmosphere at 300-900°C, such as the method disclosed in "Method for Recovering and Restoring Anode Material Graphite of Waste Lithium Ion Battery" (CN101710632A). However, such traditional recovering method cannot effectively remove the metal impurities and organic impurities in the graphite anode material, and the recovered graphite has a low degree of graphitization, poor electrical performance and instability, and the technology is backward. In addition, although the existing one-time leaching treatment for purification of metals can effectively recover the metals, it is difficult to ensure the purity of graphite. Especially, when performing lattice repair on waste graphite materials, impurities will be introduced into the graphite lattice and it is difficult to ensure the purity thereof.

CHUNWEI LIU ET AL discuss state-of-the-art on spent LIBs recycling with emphasis on lithium recovery. In addition to understanding underlying mechanisms and physiochemistry features of various recycling methods, the possibility for industrial realization of each method is also evaluated. The complex processing steps limit the industrial implementation of hydrometallurgy-dominant methods, which usually reclaim lithium in the last step, resulting in a poor recovery efficiency of lithium. The pyrometallurgy-dominant approach is readily to scale up but lithium is lost in the slag phase. Therefore, the mild recycling (cleaner production) methods are recommended for future study since they take advantages of traditional pyrometallurgy and hydrometallurgy, and could decrease treatment temperature as well as acid/alkaline usage.

CN111072023A discloses a method for recovering graphite from scrapped lithium ion battery, which comprises the following steps: carrying out alkaline leaching and acid leaching on mechanically crushed lithium ion total battery waste to obtain a graphite crude product and a filtrate containing Co, Fe, Ni and Mn metals; sieving the graphite crude product, and removing large-particle Cu generated in mechanical crushing of the waste lithium ion battery, a residual diaphragm after winnowing and unreacted large-particle Al to obtain primarily purified graphite; carrying out secondary acid leaching treatment on the primarily purified graphite to remove small-particle Fe and Cu metal impurities in the graphite; stirring and washing the reaction product to be neutral, performing suction filtration and drying to obtain secondarily purified graphite, and returning an acidic filtrate after suction filtration to the step 3 for reuse; and carrying out heat treatment on the obtained secondarily purified graphite in an air atmosphere to remove a conductive agent and a binder in the secondarily purified graphite so as to obtain the graphite with relatively high final purity.

CN110690519A discloses a lithium ion battery negative electrode material recycling method which comprises the following steps: disassembling a lithium ion battery, and separating out a negative electrode material; cutting the negative electrode material into fragments, and putting the fragments into a tubular furnace to be heated twice to obtain powder; mixing the powder with deionized water, performing ultrasonic vibration treatment, and filtering and drying the solution subjected to vibration treatment to obtain residual powder; and screening the remaining powder through screens with different meshes, to obtain copper particles and high-purity graphite. The high-purity graphite can be subjected to fine screening subsequently, and graphite with better electrochemical performance is obtained.

CN111204757A discloses a method for purifying, repairing and regenerating graphite in a retired power battery, wherein the method comprises the following steps: sequentially discharging, coarsely crushing, pyrolyzing, finely crushing and sorting the retired power battery to obtain electrode material powder; mixing, stirring and filtering the electrode material powder and the acid leaching solution to obtain filter residues; mixing the filter residues with an acidic purified liquid, stirring, and filtering to obtain coarse graphite; adding the coarse graphite into the acidic purified liquid, carrying out hydrothermal reaction, and filtering to obtain purified graphite; mixing and stirring the purified graphite and an activation solution, introducing ozone for aeration, and filtering to obtain filter residues; washing the filter residues with water, filtering and drying to obtain activated graphite; adding activated ink into a repairing agent in the molten state, and repairing to obtain turbid liquid; and carrying out spray pyrolysis on the turbid liquid, cooling and sieving to obtain the battery-grade graphite.

Therefore, there is an urgent need to develop a method for purification and lattice reconstruction of graphite in a power battery with low cost of raw materials and high efficiency.

### SUMMARY

An objective of the disclosure is to provide a method for purification and lattice reconstruction of graphite in a power battery, which is low in raw material cost and high in efficiency, and the batteries assembled by the obtained graphite anode material still have good electrochemical performance after 1600 cycles, which is superior to similar products on the market.

In order to achieve the above object, the disclosure adopts the following technical solutions.

In one aspect of the disclosure, there is provided a method for purification and lattice reconstruction of graphite in a power battery including the following steps:
(1) obtaining electrode material powder, copper powder, aluminum powder and iron powder respectively by sequentially subjecting a waste power battery to discharging, coarse breaking, pyrolysis, fine breaking and sorting;
(2) obtaining a filter residue A by performing following operations: mixing the electrode material powder with a metal extractant, standing still, then washing with a purifying agent A, and filtering; obtaining a crude graphite by performing following operations: mixing the filter residue A with the metal extractant, standing still, then washing with a purifying agent B, and filtering;
(3) obtaining a primary purified graphite by subjecting the crude graphite to a de-organic treatment, cooling, ball milling, and ventilation replacement; and
(4) repairing graphite lattice by introducing a rare gas into the primary purified graphite; wherein in step (2), the purifying agent A is a mixed solution of hydrochloric acid, ethanol and acetone, and the purifying agent B is a mixed solution of deionized water, ethanol and acetone;

wherein the repairing graphite lattice in step (4) comprises: introducing a rare gas at a flow rate of 5-30 mL/min within 40-80 min, closing an inlet valve and an outlet valve, and heating to a temperature of 2400 °C-2600 °C at a heating rate of 10-20 °C/min, keeping the temperature for 10-30 min, then heating to 2600 °C-3200 °C at a heating rate of 3-10 °C/min, and repairing the graphite having damaged lattices within 6-10 h;
wherein the de-organic treatment in step (3) comprises placing the crude graphite in a vacuum furnace at a heating rate of 1-5 °C/min to be heated to 200 °C-250 °C for the de-organic treatment for 2-4 h;
wherein the replacement in step (3) comprises introducing a replacement gas at a flow rate of 5-30 mL/min, and then heating to 250 °C-450 °C at a heating rate of 1-5 °C/min for replacement for 20-40 min;
the rare gas in step (4) is He with a volumetric purity of 99.999%.

Preferably, the pyrolysis in step (1) is carried out in an oxygen-free environment at a temperature of 350°C-800°C for 1-20 h.

Preferably, the metal extractant in step (2) is one of a mixed solution of aqua regia and an oxidant, and aqua regia.

Further preferably, the oxidant is at least one of hydrogen peroxide, sodium peroxide, potassium peroxide, sodium hypochlorite or potassium hypochlorite.

More preferably, the oxidant has a concentration of 0.05-1 mol/L.

More preferably, the aqua regia has a concentration of 10%-50%.

Preferably, the mass ratio of hydrochloric acid, ethanol and acetone is 1: (1-5): (1-5).

Preferably, the mass ratio of deionized water, ethanol and acetone is 1: (1-5): (1-5).

Preferably, in step (3), the graphite is rotated at a speed of 100-3000 r/min for 20-60 min.

More preferably, the replacement gas is a gas mixture of H₂ and N₂.

### Beneficial effects

1. The disclosure adopts a method similar to vacuum evaporation to remove the organic components in the graphite. According to the disclosure, the organic impurities are evaporated or sublimated into gaseous particles under high temperature and vacuum conditions, and the gaseous particles are completely separated from the graphite under negative pressure, thus the organic impurities can be removed. After the de-organic treatment, secondary bonding will not occur between the graphite and the organic impurities again, thereby obtaining the high-purity graphite.
2. The disclosure uses replacement gas to deeply clean the graphite, so that the species adsorbed on the surface of graphite are completely desorbed before graphitization treatment, ensuring that no impurity atoms are arranged into the graphite lattice before graphitization, and the impurity removal at the atomic level is achieved, so that the impurity removal is effectively achieved, and the surface activity of the graphite is prevented from changing by the active functional groups on the surface of graphite, thereby forming graphite with intact crystal form.
3. The disclosure adopts a carbon source-free repairing, the atoms on the grid rearranges under He atmosphere and high temperature conditions, thereby realizing the self-repairing of the graphite anode material, forming a relatively intact graphite crystal form, and achieving the effect of self-healing the graphite defects. Therefore, the batteries assembled by the obtained graphite anode material have good electrochemical performance after 1600 cycles, which is superior to similar products on the market.

### BRIEF DESCRIPTION OF THE DRAWINGS

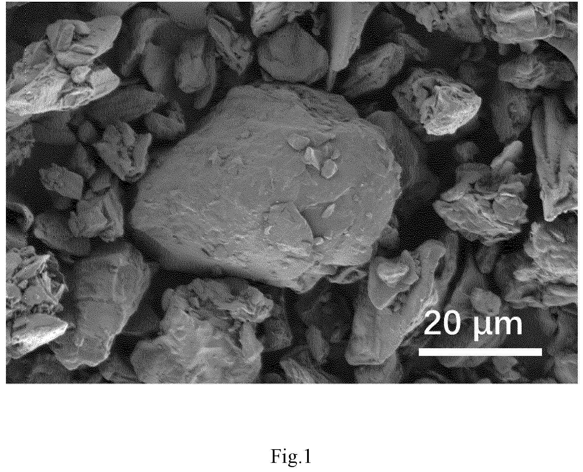

Figure 1 is an SEM image of graphite prepared in Embodiment 1;

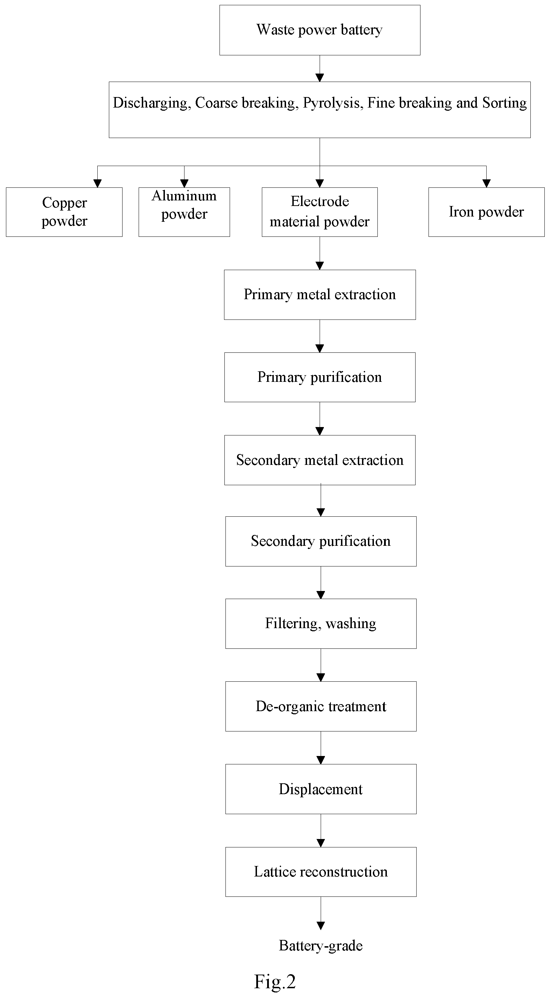

Figure 2 is a flow chart of a method for purification and lattice reconstruction of graphite in a power battery according to Embodiments 1-3 of the disclosure;
Figure 3 is an XRD pattern of graphite prepared in Embodiment 1; and
Figure 4 is a graph showing the cycle performance of graphite prepared in Embodiment 1 and Comparative Embodiment 1.

### DETAILED DESCRIPTION OF THE EMBODIMENTS

In order to make those skilled in the art more clearly understand the technical solutions of the disclosure, the following embodiments are set forth for description. It should be noted that the following embodiments do not constitute a limitation on the protection scope of the disclosure.

Unless particularly stated, the raw materials, reagents or devices used in the following embodiments can all be obtained from conventional commercial sources, or can be obtained by existing known methods.

### Embodiment 1

A method for purification and lattice reconstruction of graphite in a power battery of this embodiment includes the following specific steps:
(1) subjecting a waste power battery to discharging, coarse breaking, pyrolysis, fine breaking and sorting sequentially to obtain electrode material powder, copper foil, aluminum foil and iron powder, respectively;
(2) mixing the electrode material powder with aqua regia having a concentration of 20% and hydrogen peroxide having a concentration of 0.1 mol/L at a solid-liquid ratio of 1:1 in a metal extraction tank and standing still for 4 hours to extract metal elements in the graphite anode, then washing with hydrochloric acid having a concentration of 2%, ethanol, and acetone at a ratio of 1:1:1, filtering to obtain a filter residue A and mixing the filter residue A with aqua regia having a concentration of 10% and hydrogen peroxide having a concentration of 0.05 mol/L at a solid-liquid ratio of 1:1 in a metal extraction tank, and standing still for 4 hours, extracting the metal elements in the graphite anode again, washing the same with deionized water, ethanol and acetone at a ratio of 1:1:1, and filtering to obtain a crude graphite;
(3) subjecting the crude graphite to de-organic treatment in a vacuum furnace at 200°C (with a heating rate of 1°C/min) for 2 h, ball-milling the same at 100 r/min for 20 min after natural cooling, and then placing the de-organized crude graphite in a high-temperature furnace, and introducing a replacement gas (H₂ with a concentration of 2%) at a flow rate of 5 mL/min, then performing replacement at a temperature of 250°C (with a heating rate of 1°C/min) for 20 min to remove surface adsorbed species; and
(4) after the replacement is completed, introducing He with a volumetric purity of 99.999% at a flow rate of 5 mL/min at 250°C within 40 min, closing an inlet valve and an outlet valve, and heating to a temperature of 2400°C at a heating rate of 10°C/min, keeping the temperature for 10 min, then heating to 2600°C at a heating rate of 3°C/min, and repairing the graphite having damaged lattices within 6 h to obtain a battery-grade graphite.

### Embodiment 2

A method for purification and lattice reconstruction of graphite in a power battery of this embodiment includes the following specific steps:
(1) subjecting a waste power battery to discharging, coarse breaking, pyrolysis, fine breaking and sorting sequentially to obtain electrode material powder, copper foil, aluminum foil and iron powder, respectively;
(2) mixing the electrode material powder with aqua regia having a concentration of 35% and sodium hypochlorite having a concentration of 0.5mol/L at a solid-liquid ratio of 1:3 in a metal extraction tank and standing still for 8 hours at 25°C to extract metal elements in the graphite anode, then washing with hydrochloric acid having a concentration of 15%, ethanol, and acetone at a ratio of 1:3:3, filtering to obtain a filter residue A and mixing the filter residue A with aqua regia having a concentration of 20% and sodium hypochlorite having a concentration of 0.15 mol/L at a solid-liquid ratio of 1:3 in the metal extraction tank, and standing still for 8 hours, extracting the metal elements in the graphite anode again, washing the same with deionized water, ethanol and acetone at a ratio of 1:3:3, and filtering to obtain a crude graphite;
(3) subjecting the crude graphite to de-organic treatment in a vacuum furnace at 230°C (with a heating rate of 3°C/min) for 3h, ball-milling the same at 2000 r/min for 40 min after natural cooling, and then placing the de-organized crude graphite in a high-temperature furnace, and introducing a replacement gas (H₂ with a concentration of 15%) at a flow rate of 5 mL/min, then performing replacement at a temperature of 300°C (with a heating rate of 3°C/min) for 30 min to remove surface adsorbed species; and
(4) after the replacement is completed, introducing He with a purity of 99.999% at a flow rate of 20 mL/min at 300°C within 60 min, closing an inlet valve and an outlet valve, and heating to a temperature of 2500°C at a heating rate of 15°C/min, keeping the temperature for 20 min, then heating to 3000°C at a heating rate of 7°C/min, and repairing the graphite having damaged lattices within 8 h to obtain a battery-grade graphite.

### Embodiment 3

A method for purification and lattice reconstruction of graphite in a power battery of this embodiment includes the following specific steps:
(1) subjecting a waste power battery to discharging, coarse breaking, pyrolysis, fine breaking and sorting sequentially to obtain electrode material powder, copper foil, aluminum foil and iron powder, respectively;
(2) mixing the electrode material powder with aqua regia having a concentration of 50% and postassium hypochlorite having a concentration of 1 mol/L at a solid-liquid ratio of 1:5 in a metal extraction tank and standing still for 12 hours to extract metal elements in the graphite anode, then washing with hydrochloric acid having a concentration of 30%, ethanol, and acetone at a mass ratio of 1:5:5, filtering to obtain a filter residue A and mixing the filter residue A with aqua regia having a concentration of 30% and postassium hypochlorite having a concentration of 0.3 mol/L at a solid-liquid ratio of 1:5 in the metal extraction tank, and standing still for 12 hours, extracting the metal elements in the graphite anode again, washing the same with deionized water, ethanol and acetone at a mass ratio of 1:5:5, and filtering to obtain a crude graphite;
(3) subjecting the crude graphite to de-organic treatment in a vacuum furnace at 250°C (with a heating rate of 5°C/min) for 4h, ball-milling the same at 3000 r/min for 60 min after natural cooling, and then placing the de-organized crude graphite in a high-temperature furnace, and introducing a replacement gas (H₂ with a concentration of 30%) at a flow rate of 30 mL/min, then performing replacement at a temperature of 450°C (with a heating rate of 5°C/min) for 40 min to remove surface adsorbed species; and
(4) after the replacement is completed, introducing He with a volumetric purity of 99.999% at a flow rate of 20 mL/min at 450°C within 40 min, closing an inlet valve and an outlet valve, and heating to a temperature of 2600°C at a heating rate of 15°C/min, keeping the temperature for 30 min, then heating to 3200°C at a heating rate of 10°C/min, and repairing the graphite having damaged lattices within 10 h to obtain a battery-grade graphite.

### Comparative Embodiment 1

A method for preparing artificial graphite anode material includes the following steps:
(1) taking and subjecting a waste battery to discharging, disassembling and breaking, subjecting a copper foil coated with the graphite anode to hydrothermal treatment and centrifugation for solid-liquid separation, oven-drying to obtain the mixed material of graphite and conductive agent powder; and
(2) adding petroleum asphalt and silicon carbide to be mixed and compression molded, treating the same under the protection of N₂ and at 800°C for 8 h to obtain a repaired and regenerated artificial graphite anode material.

### Comparative Embodiment 2

A method for preparing graphite includes the following steps:
(1) subjecting a waste power battery to discharging, coarse breaking, pyrolysis, fine breaking and sorting sequentially, taking and leaching an electrode material powder and 0.1 mol/L of sulfuric acid at a solid-liquid volume ratio of 1:5 for 6 hours, then washing with 2% of hydrochloric acid, and filtering to obtain graphite.

### Performance Test:

The graphite obtained respectively in the above Embodiments 1-3 and Comparative Embodiment 1 was used as the anode, and a lithium sheet was used as the cathode. The graphite and the lithium sheet were assembled into a button battery, and the initial discharge test was carried out at a rate of 1C. The results are shown in Table 2 and Table 3. It can be seen from Table 1 that the regenerated graphite in Embodiment 2 has low impurity content, and the degree of graphitization reaches 96%, while the degree of graphitization in Comparative Embodiment 1 is only 92%. It can be seen according to Table 2 that, at a rate of 1C, the initial discharge specific capacity of the regenerated graphite anode material of the disclosure is higher than that of graphite recovered by an ordinary method, and the initial discharge specific capacity of Embodiment 2 is 362.3 mAh/g, while the initial discharge specific capacity of Comparative Embodiment is only 333.1 mAh/g. It can be seen according to Table 3 that, at a rate of 1C, the cycle life of the regenerated graphite anode material of the disclosure is higher than that of graphite recovered by an ordinary method, and the capacity retention rate of Embodiment 2 after 1600 cycles at 1C is 96.6%, while the capacity retention rate of Comparative Embodiment 1 is only 92.8 %. Table 4 shows the concentration and ash content of the impurity elements obtained in Embodiment 2 and Comparative Embodiment 2 after extracting the metal elements by the acid solution. It can be seen from Table 4 that after two acid extractions in Embodiment 2, the content of metal impurities in graphite is significantly lower than that of metal impurities in Comparative Embodiment 2 after one acid extraction.

The results are as shown in Table 1:

**Table 1 Composition Analysis and Physical Properties of Graphite**

| Item | Embodiment 1 | | Embodiment 2 | | Embodiment 3 | | Comparative Embodiment 1 | |
|---|---|---|---|---|---|---|---|---|
| Ash content % | | 0.046 | | 0.043 | | 0.041 | | 0.088 |
| Moisture % | | 0.0331 | | 0.0335 | | 0.0329 | | 0.0656 |
| Volatile % | | 0.0193 | | 0.0198 | | 0.0211 | | 0.0466 |
| D50 µm | | 18.59 | | 18.61 | | 18.56 | | 18.63 |
| Degree of graphitization % | | 95 | | 96 | | 94 | | 92 |
| Fixed carbon content % | | 99.96 | | 99.98 | | 99.95 | | 99.70 |

**Table 2 Performance of button battery of graphite**

| Item | Embodiment 1 | | Embodiment 2 | | Embodiment 3 | | Comparative Embodiment 1 | |
|---|---|---|---|---|---|---|---|---|
| Initial discharge specific capacity mAh/g | | 361.9 | | 362.3 | | 362.1 | | 333.1 |
| Initial charge-discharge efficiency % | | 93.8 | | 93.9 | | 93.9 | | 91.2 |

**Table 3 Full battery cycle performance of graphite**

| Item | Embodiment 1 | Embodiment 2 | Embodiment 3 | Comparative Embodiment 1 |
|---|---|---|---|---|
| Discharge capacity retention rate % after 1600 cycles at 1C | 95.9 | 96.6 | 96.3 | 92.8 |

**Table 4 Impurity content of graphite after metal extraction**

| Impurities | Ni (%) | Co (%) | Mn (%) | Li (%) | Fe (%) | Al (%) | Cu (%) | Total (%) | Ash (%) |
|---|---|---|---|---|---|---|---|---|---|
| Embodiment 2 | 0.001 | 0.003 | 0.001 | 0.001 | 0.002 | 0.001 | 0.001 | 0.01 | 0.019 |
| Comparative Embodiment 2 | 0.01 | 0.008 | 0.005 | 0.02 | 0.05 | 0.01 | 0.004 | 0.107 | 0.183 |

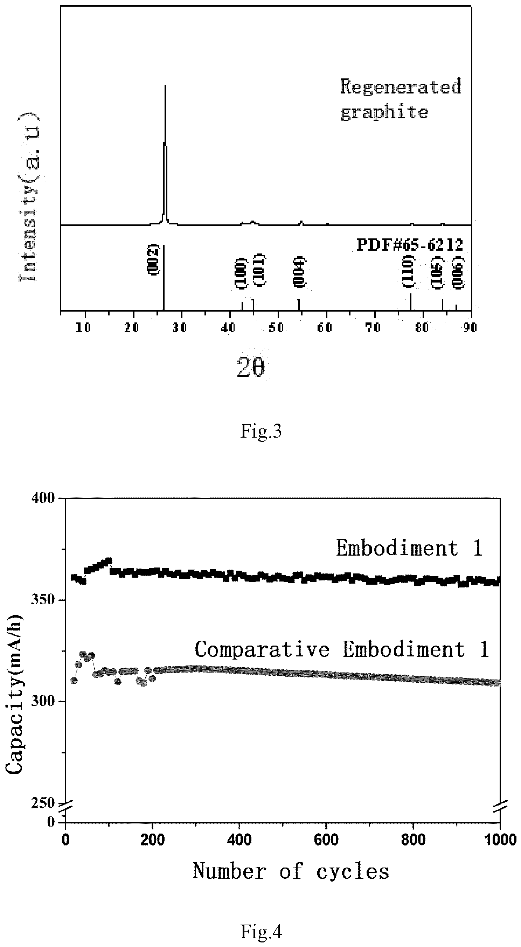

From the XRD pattern of the graphite prepared in Embodiment 1 (Figure 3), it is found that in comparison with PDF#65-6212, the peak at around 26.5° corresponds to the crystal plane (002) of the regenerated graphite in Embodiment 1, which shows that the crystal form of the regenerated graphite sample of Embodiment 1 is better. From the graphs of the cycle performance of the graphite prepared in Embodiment 1 and Comparative Embodiment 1 (Figure 4), it is found that the capacity and cycle stability of the regenerated graphite of Embodiment 1 are better than those of Comparative Embodiment 1.

A detailed introduction to a method for purification and lattice reconstruction of graphite in a power battery according to the disclosure is provided above. The principles and implementations of the disclosure are explained by way of specific embodiments herein. The above embodiments are only provided to facilitate the understanding of the method of the disclosure and core concepts thereof, including the best mode, and also enables any person skilled in the art to practice the disclosure, including manufacturing and using any device or system, and implementing any combined method.

## Claims

1. A method for purification and lattice reconstruction of graphite in a power battery, comprising the following steps:
(1) obtaining electrode material powder, copper powder, aluminum powder and iron powder respectively by sequentially subjecting a waste power battery to discharging, coarse breaking, pyrolysis, fine breaking and sorting;
(2) obtaining a filter residue A by performing following operations: mixing the electrode material powder with a metal extractant, standing still, then washing with a purifying agent A, and filtering; obtaining a crude graphite by performing following operations: mixing the filter residue A with the metal extractant, standing still, then washing with a purifying agent B, and filtering;
(3) obtaining a primary purified graphite by subjecting the crude graphite to a de-organic treatment, cooling, ball milling, and ventilation replacement; and
(4) repairing graphite lattice by introducing a rare gas into the primary purified graphite; wherein in step (2), the purifying agent A is a mixed solution of hydrochloric acid, ethanol and acetone, and the purifying agent B is a mixed solution of deionized water, ethanol and acetone;
wherein the repairing graphite lattice in step (4) comprises: introducing a rare gas at a flow rate of 5-30 mL/min within 40-80 min, closing an inlet valve and an outlet valve, and heating to a temperature of 2400°C-2600°C at a heating rate of 10-20°C/min, keeping the temperature for 10-30 min, then heating to 2600°C-3200°C at a heating rate of 3-10°C/min, and repairing the graphite having damaged lattices within 6-10 h;
wherein the de-organic treatment in step (3) comprises placing the crude graphite in a vacuum furnace at a heating rate of 1-5°C/min to be heated to 200°C-250°C for the de-organic treatment for 2-4 h;
wherein the replacement in step (3) comprises introducing a replacement gas at a flow rate of 5-30 mL/min, and then heating to 250°C-450°C at a heating rate of 1-5°C/min for replacement for 20-40 min;
wherein the rare gas in step (4) is He with a volumetric purity of 99.999%.

2. The method for purification and lattice reconstruction of graphite in a power battery of claim 1, wherein the pyrolysis in step (1) is carried out in an oxygen-free environment at a temperature of 350°C-800°C for 1-20 h.

3. The method for purification and lattice reconstruction of graphite in a power battery of claim 1, wherein the metal extractant in step (2) is one of a mixed solution of aqua regia and an oxidant, and aqua regia.

4. The method for purification and lattice reconstruction of graphite in a power battery of claim 3, wherein the oxidant is at least one of hydrogen peroxide, sodium peroxide, potassium peroxide, sodium hypochlorite or potassium hypochlorite.

5. The method for purification and lattice reconstruction of graphite in a power battery of claim 1, wherein the replacement gas is a gas mixture of H₂ and N₂.

## Patentansprüche

1. Verfahren für eine Reinigung und eine Gitterrekonstruktion von Graphit in einer Leistungsbatterie, umfassend die folgenden Schritte:
(1) Erhalten von Elektrodenmaterialpulver, Kupferpulver, Aluminiumpulver bzw. Eisenpulver durch ein sequenzielles Aussetzen einer Altbatterie gegenüber Entladen, Grobzerkleinern, Pyrolyse, Feinzerkleinern und Sortieren;
(2) Erhalten eines Filterrückstands A durch ein Durchführen der folgenden Vorgänge: Mischen des Elektrodenmaterialpulvers mit einem Metallextraktionsmittel, Stillstehenlassen, dann Waschen mit einem Reinigungsmittel A und Filtern; Erhalten eines Rohgraphits durch das Durchführen der folgenden Vorgänge: Mischen des Filterrückstands A mit dem Metallextraktionsmittel, Stillstehenlassen, dann Waschen mit einem Reinigungsmittel B und Filtern;
(3) Erhalten eines primären gereinigten Graphits durch das Aussetzen des Rohgraphits gegenüber deorganischer Behandlung, Kühlen, Kugelmahlen und Belüftungsaustausch; und
(4) Reparieren des Graphitgitters durch ein Einführen eines Edelgases in den primären gereinigten Graphit; wobei in Schritt (2) das Reinigungsmittel A eine Mischlösung aus Salzsäure, Ethanol und Aceton ist und das Reinigungsmittel B eine Mischlösung aus deionisiertem Wasser, Ethanol und Aceton ist;
wobei das Reparieren des Graphitgitters in Schritt (4) umfasst: Einführen eines Edelgases mit einer Flussrate von 5-30 ml/min innerhalb von 40-80 min, Schließen eines Einlassventils und eines Auslassventils und Erhitzen auf eine Temperatur von 2400 °C-2600 °C mit einer Heizrate von 10-20 °C/min, Halten der Temperatur für 10-30 min, dann Erhitzen auf 2600 °C-3200 °C mit einer Heizrate von 3-10 °C/min und Reparieren des Graphits, der beschädigte Gitter aufweist, innerhalb von 6-10 h;
wobei die deorganische Behandlung in Schritt (3) ein Platzieren des Rohgraphits in einem Vakuumofen bei einer Heizrate von 1-5 °C/min umfasst, um auf 200 °C-250 °C für die deorganische Behandlung für 2-4 h erhitzt zu werden;
wobei der Austausch in Schritt (3) das Einführen eines Austauschgases mit einer Flussrate von 5-30 ml/min und dann das Erhitzen auf 250 °C-450 °C mit einer Heizrate von 1-5 °C/min für einen Austausch für 20-40 min umfasst;
wobei das Edelgas in Schritt (4) He mit einer volumetrischen Reinheit von 99,999 % ist.

2. Verfahren für die Reinigung und die Gitterrekonstruktion von Graphit in einer Leistungsbatterie nach Anspruch 1, wobei die Pyrolyse in Schritt (1) in einer sauerstofffreien Umgebung bei einer Temperatur von 350 °C-800 °C für 1-20 h ausgeführt wird.

3. Verfahren für die Reinigung und die Gitterrekonstruktion von Graphit in einer Leistungsbatterie nach Anspruch 1, wobei das Metallextraktionsmittel in Schritt (2) eines von einer Mischlösung aus Königswasser und einem Oxidationsmittel, und Königswasser ist.

4. Verfahren für die Reinigung und die Gitterrekonstruktion von Graphit in einer Leistungsbatterie nach Anspruch 3, wobei das Oxidationsmittel mindestens eines von Wasserstoffperoxid, Natriumperoxid, Kaliumperoxid, Natriumhypochlorit oder Kaliumhypochlorit ist.

5. Verfahren für die Reinigung und die Gitterrekonstruktion von Graphit in einer Leistungsbatterie nach Anspruch 1, wobei das Austauschgas ein Gasgemisch aus H₂ und N₂ ist.

## Revendications

1. Procédé de purification et de reconstruction du réseau du graphite dans une batterie d'énergie, comprenant les étapes suivantes :
(1) l'obtention de la poudre de matériau d'électrode, de la poudre de cuivre, de la poudre d'aluminium et de la poudre de fer respectivement en soumettant successivement une batterie d'énergie usagée à la décharge, au broyage grossier, à la pyrolyse, au broyage fin et au triage ;
(2) l'obtention d'un résidu de filtration A en effectuant les opérations suivantes : le mélange de la poudre de matériau d'électrode avec un agent d'extraction de métal, l'immobilisation, puis le lavage avec un agent de purification A et la filtration ; l'obtention d'un graphite brut en effectuant les opérations suivantes : le mélange du résidu de filtration A avec l'agent d'extraction métallique, l'immobilisation, puis le lavage avec un agent de purification B, et le filtrage ;
(3) l'obtention d'un graphite purifié primaire en soumettant le graphite brut à un traitement désorganique, à un refroidissement, à un broyage à boulets et à un remplacement de la ventilation ; et
(4) la réparation de réseau de graphite en introduisant un gaz rare dans le graphite purifié primaire ; dans lequel, à l'étape (2), l'agent purifiant A est une solution mixte d'acide chlorhydrique, d'éthanol et d'acétone, et l'agent purifiant B est une solution mixte d'eau désionisée, d'éthanol et d'acétone ;
dans lequel la réparation de réseau de graphite à l'étape (4) comprend : l'introduction d'un gaz rare à un débit de 5 à 30 mL/min en 40 à 80 min, la fermeture d'une vanne d'entrée et d'une vanne de sortie, et le chauffage à une température de 2400 °C à 2600 °C à une vitesse de chauffage de 10 à 20 °C/min, le maintien de la température pendant 10 à 30 min, puis le chauffage entre 2600 °C à 3200 °C à une vitesse de chauffage de 3 à 10 °C/min, et la réparation du graphite dont le réseau est endommagé en 6 à 10 h ;
dans lequel le traitement désorganique de l'étape (3) comprend le placement du graphite brut dans un four sous vide à une vitesse de chauffage de 1 à 5 °C/min pour le chauffage entre 200 °C à 250 °C pour le traitement désorganique pendant 2 à 4 h ;
dans lequel le remplacement à l'étape (3) comprend l'introduction d'un gaz de remplacement à un débit de 5 à 30 ml/min, puis le chauffage entre 250 °C et 450 °C à une vitesse de 1 à 5 °C/min pour le remplacement pendant 20 à 40 min ;
dans lequel le gaz rare de l'étape (4) est He avec une pureté volumétrique de 99,999 %.

2. Procédé de purification et de reconstruction du réseau du graphite dans une batterie d'énergie selon la revendication 1, dans lequel la pyrolyse à l'étape (1) est effectuée dans un environnement sans oxygène à une température de 350 °C à 800 °C pendant 1 à 20 h.

3. Procédé de purification et de reconstruction du réseau du graphite dans une batterie d'énergie selon la revendication 1, dans lequel l'agent d'extraction des métaux à l'étape (2) est une solution mixte d'eau régale et d'oxydant, et d'eau régale.

4. Procédé de purification et de reconstruction du réseau du graphite dans une batterie d'énergie selon la revendication 3, dans lequel l'oxydant est au moins l'un des peroxydes d'hydrogène, peroxydes de sodium, peroxydes de potassium, hypochlorite de sodium ou hypochlorite de potassium.

5. Procédé de purification et de reconstruction du réseau du graphite dans une batterie d'énergie selon la revendication 1, dans lequel le gaz de remplacement est un mélange de H₂ et de N₂.
